# EUROPEAN PATENT APPLICATION

(11) **EP 4 797 362 A1**
(43) Date of publication of application: **26.08.2026**
(21) Application number: 25159916.3
(22) Date of filing: 25.02.2025
(51) Int. Cl.: H01M 8/0252, B64D 27/355, H01M 8/04014, H01M 8/0612, H01M 8/0297, H01M 8/12

(54) **ENERGY CONVERSION ARRANGEMENT WITH PRE-HEATING DUCT FOR GAS RECIRCULATION, AS WELL AS ENERGY SYSTEM AND APPARATUS COMPRISING SAME**

(71) Applicant: AIRBUS Operations GmbH, 21129 Hamburg (DE)
(72) Inventor: Nehter, Pedro, 21129 Hamburg (DE); Geisler, Helge Ingolf, 21129 Hamburg (DE); Ahilan, Vignesh, 21129 Hamburg (DE)

(57) **Abstract**

An energy conversion arrangement (2) for an apparatus (1), a corresponding energy system (2), in particular for powering a propulsion unit (5) for propelling an apparatus (1), and an apparatus (1), in particular an aircraft, are provided, comprising a fuel conversion device (10), in particular a fuel cell unit, for generating electrical and/or mechanical energy by oxidising a reductant (R) contained in a fuel gas (F) by means of an oxidant (O) contained in a reactant gas (G), with at least one anode element (31) configured to take up the electrons (e) shed by the reductant (R) and to be picked up by the oxidant (O) during fuel conversion; at least one anode channel (12) configured to lead the reactant gas (G) along the at least one anode element (31); and/or at least one cathode element (32) configured to provide electrons (e) shed by the reductant (R) and to be picked up by the oxidant (O) during fuel conversion; at least one cathode channel (13) configured to lead the reactant gas (G) along the at least one cathode element (32); and at least one pre-heating duct (14) configured to at least partly recirculate the fuel gas (F) within the anode channel (12) and/or the reactant gas (G) within the cathode channel (13), respectively.

## Description

### Technical Field

The present disclosure relates to the field of energy systems comprising fuel cells, particularly solid oxide fuel cells (SOFC) in lightweight applications involving energy conversion of hydrogen, hydrocarbon or ammonia type of fuels for providing electrical energy enabling aircraft propulsion. In particular, the disclosure relates to an energy conversion arrangement for an apparatus, such as an aircraft, comprising a fuel conversion device, in particular a fuel cell unit, for generating electrical and/or mechanical energy by oxidising a reductant contained in a fuel gas by means of an oxidant contained in a reactant gas, to an energy system, in particular for powering a propulsion unit for propelling an apparatus, such as an aircraft, and to an apparatus, in particular aircraft.

### Technical Background

Alternative fuels are currently emerging for replacing fossil fuels in order to avoid their environmental impact. Vehicles, such as hydrogen powered fuel cell aircrafts, may use hydrogen to power their propulsion and also for power generation, in that the alternative fuels may replace conventional fuels, such as kerosene, for operating any fuel conversion device on the aircraft, including propulsion units and auxiliary power units (APUs). The electrochemical conversion of hydrogen does not directly lead to a formation of carbon dioxide as well as other hydrocarbon combustion related emissions, such as particulates, and is thus seen as a pathway to an environmentally friendly and sustainable aviation.

According to the prior art, SOFC are originally mainly developed for stationary applications due to their relatively low gravimetric power density. However, recent progress in SOFC development allows for high power densities. Manufacturing technologies have evolved that allow for providing tubular and monolithic SOFC concepts to some very attractive solutions for aviation applications. Emerging production techniques, such as additive manufacturing of ceramics (e.g., scandia stabilized zirconia) allow for providing electrolyte supported cells operating at temperatures of >750°C, applicable for high power density concepts like monolithic and/or micro channel geometries.

Main components of typically planar SOFC stacks according to the prior art are their cells and interconnectors configured to connect multiple planar cells electrically in series and furthermore to achieve practical usable voltages. The cells commonly consist of an oxide conducting ceramic electrolyte covered with a negatively charged electrode (anode) on a fuel side and positively charged electrode (cathode) on an air side during operation of the SOFC stack. Metallic interconnectors are commonly used to electrically connect each cell of the stack to its neighbouring cell and furthermore to separate the fuel from the air gas channel of two neighbouring cells.

SOFCs known from the prior art are commonly cooled to maintain a preferred operating temperature by an excess of reactant air provided to the cathode side of the SOFC. Planar stack concepts typically require relatively small thermal gradients to avoid mechanical stresses within the fragile ceramic materials. Thus, a relatively large air flow for cooling of the SOFC is required, which in turn requires large and heavy heat exchangers for preheating intake air from the temperature level of an air intake, which can be arranged at the outlet of the air compressor, for example, in order to be heated up to the required temperature level at an inlet of the SOFC. In this regards, emerging tubular and monolithic cell designs offer a major optimization potential in this because the air preheating can principally be integrated within the stack, which very effectively reduces the amount of cooling air.

US 2012/058410 A1, for example, describes an SOFC including a tubular first electrode support layer formed with a plurality of first passages; an inner electrolyte layer formed in the first electrode support layer; an inner second electrode layer formed on the inner surface of the first electrolyte layer and forming an inner second passage; an outer electrolyte layer formed on the outer surface of the first electrode support layer; and an outer second electrode layer formed on the outer surface of the second electrolyte layer and adjacent to the outer second passage.

B. Hari, J.P. Brouwer, A. Dhir, R. Steinberger-Wilckens, "A computational fluid dynamics and finite element analysis design of a microtubular solid oxide fuel cell stack for fixed wing mini unmanned aerial vehicles", International Journal of Hydrogen Energy, Volume 44, Issue 16, 2019, Pages 8519-8532, ISSN 0360-3199, https://doi.org/10.1016/j.ijhydene.2019.01.170. (https: //www.sciencedirect.com/science/article/pii/S0360319919303283), for example, state that computational fluid dynamics (CFD) and finite element analysis (FEA) are important modelling and simulation techniques to design and develop fuel cell stacks and their balance of plant (BoP) systems. The aim of their work is to design a microtubular solid oxide fuel cell (SOFC) stack by coupling CFD and FEA models to capture the multiphysics nature of the system. The focus is to study the distribution of fluids inside the fuel cell stack, the dissipation of heat from the fuel cell bundle, and any deformation of the fuel cells and the stack canister due to thermal stresses, which is important to address during the design process. The stack is part of an innovative all-in-one SOFC generator with an integrated BoP system to power a fixed wing mini unmanned aerial vehicle. Including the computational optimisation at an early stage of the development process is hence a prerequisite in developing a reliable and robust all-in-one SOFC generator system. The presented computational model considers the bundle of fuel cells as the heat source. This could be improved in the future by replacing the heat source with electrochemical reactions to accurately predict the influence of heat on the stack design.

F.J Gardner, M.J Day, N.P Brandon, M.N Pashley, M Cassidy, "SOFC technology development at Rolls-Royce", Journal of Power Sources, Volume 86, Issues 1-2, 2000, Pages 122-129, ISSN 0378-7753, https://doi.org/10.1016/S0378-7753(99)00428-0. (https://www.sciencedirect.com/science/article/pii/S0378775399004280), state that fuel cells have the prospect for exploiting fossil fuels more benignly and more efficiently than alternatives. The various types represent quite different technologies, with no clear winner, yet. Nevertheless, the high temperature MCFC and solid oxide fuel cell (SOFC) types seem better suited to power generation in a hydrocarbon fuel economy. During the time of the study, the costs of MCFCs and SOFCs are too high to compete directly with contemporary power generation plant. Seeking to overcome the drawbacks of first generation fuel cells, over the past 7 years before the study, an innovative second generation SOFC concept has been evolved in the Rolls-Royce Strategic Research Centre, with encouraging results. It is distinguished from other types by the name: Integrated Planar Solid Oxide Fuel Cell (IP-SOFC). It is a family of integrated system concepts supporting product flexibility with evolutionary stretch potential from a common SOFC module. Fabrication of the key component of the IP-SOFC, the "multi-cell membrane electrode assembly (multi-cell MEA) module" carrying many series connected cells with supported electrolyte membranes only 10 to 20 µm thick, has been proved.

Above-described Cell designs as known from the prior art may offer some optimization potential in that air preheating capabilities can principally be integrated in the fuel cell stack, thus allowing to reduce an amount of cooling air very effectively. However, temperature differences between the inlet of the and air outlet of cells as known from the prior art remain at around 300 K for tubular SOFC concepts which is still too small to design a compact system allowing to use hydrogen as a fuel. The disadvantage of cooling concepts known from the prior art especially apply to hydrogen operation in that only limited temperature differences (approx. 150 to 200 K) for planar SOFC concepts can be used between the air in- and outlet for heating up inlet air, thus requiring relatively large system components, such as compressors and pre-heating heat exchangers.

### Summary

It may thus be seen as an object to it may be seen as an object to further increase power density of energy systems comprising fuel cells. Moreover, it can be seen as an object to reduce overall system weights and costs, particularly for allowing the utilization of hydrogen, hydrocarbon or ammonia-based fuel powered SOFC in airborne apparatuses. These objects are at least partly achieved by the subject-matter of the independent claims.

According to an aspect, an energy for an apparatus, such as an aircraft, is provided, comprising a fuel conversion device, in particular a fuel cell unit, for generating electrical and/or mechanical energy by oxidising a reductant contained in a fuel gas by means of an oxidant contained in a reactant gas, with at least one anode element configured to take up the electrons shed by the reductant and to be picked up by the oxidant during fuel conversion; at least one anode channel configured to lead the reactant gas along the at least one anode element; and/or at least one cathode element configured to provide electrons shed by the reductant and to be picked up by the oxidant during fuel conversion; at least one cathode channel configured to lead the reactant gas along the at least one cathode element; and at least one pre-heating duct configured to at least partly recirculate the fuel gas within the anode channel and/or the reactant gas within the cathode channel, respectively.

According to an aspect, an energy system, in particular for powering a propulsion unit for propelling an apparatus, such as an aircraft, is provided comprising a corresponding energy conversion arrangement.

According to an aspect, an apparatus, in particular aircraft, is provided, comprising a corresponding energy conversion arrangement and/or a corresponding energy system.

The at least one pre-heating duct can be least partially arranged within the at least one anode channel and/or the at least one cathode channel The proposed solution allows to pre-heat the fuel gas, such as hydrogen, a hydrocarbon and/or ammonia-based fuel, and/or the reactant gas, such as air. The pre-heating can be achieved through the recirculation as well as within the pre-heating duct by heat picked up from the respective surroundings. The proposed usage of the fuel gas and/or reactant gas as a heating and cooling medium allows to reduce the overall amount of reactant gas required for operating a respective energy system.

Advantages of the proposed thus solution lie in that lowering a ratio of reactant gas, such as an air ratio, required for cooling the fuel conversion device in turn reduces overall system sizes, weight and cost. Furthermore, efficiency of the energy system can be increased. Consequently, the proposed solution allows to provide energy conversion arrangements and respective energy systems which meet requirements for airborne apparatuses, such as fixed and/or rotary wing aircraft and alike.

Further developments can be derived from the dependent claims and from the following description. Features described with reference to devices and arrangements may be implemented as method steps, or vice versa. Therefore, the description provided in the context of the apparatus and its components apply in an analogous manner also to respective methods. In particular, the functions of the apparatus and of its components may be implemented as method steps of the methods and the method steps may be implemented as functions of the apparatus and its components.

According to an embodiment, the at the at least one pre-heating duct is configured to lead the fuel gas to the anode channel and to heat up the fuel gas by heat provided by the fuel gas in the anode channel, and/or to lead the reactant gas to the cathode channel and to heat up the reactant gas by heat provided by respective surrounding gas, in particular during and/or after the energy conversion, through heat transfer. The pre-heating can thus be further achieved through a heat exchange with the respective surroundings gas, in particular during and/or after the energy conversion, through heat transfer. While the gas flowing in on the one hand is pre-heated on its way into the respective gas channel, the gas within the channel, and thus respective electrochemically active section of the fuel cell system, can be cooled. This further helps in reducing overall system sizes, weight and cost, while increasing efficiency of the energy system.

According to an embodiment, the at the at least one pre-heating duct is configured to at least partially provide a counter-flow heat exchange between the fuel gas in the at least one anode channel and the reactant gas in the at least one pre-heating duct, and/or between the reactant gas in the at least one cathode channel and the reactant gas in the at least one pre-heating duct, respectively. By providing a counterflow heat exchange, the gas in the pre-heating duct may be preheated to a temperature at an outlet of the pre-heating duct which can be higher than a temperature of the gas at an outlet of the anode and/or cathode channel, respectively. Thereby, an amount of thermal energy exchanged between the gas in the pre-heating duct and the surrounding gas channel may be maximised. This in turn further helps in lowering a ratio of reactant gas required for cooling the fuel conversion device, thus enables to reduce overall system sizes, weight and cost, while increasing efficiency of the energy system.

According to an embodiment, the at least one cathode element, the at least one anode element, the at least one anode channel, the at least one cathode element, the at least one cathode channel and/or the at least one pre-heating duct are at least partially arranged coaxially with respect to each other. The coaxial arrangement allows for integrating the pre-heating duct in the respective gas channel in a manner that on the one hand, a compact design of the energy conversion arrangement is provided. On the other hand, surface areas made available for heat transfer by respective heat exchange surfaces provided at the outer and inner perimeters of the pre-heating duct and the cathode channel can be maximised. This additionally helps in maximising an amount of thermal energy exchanged between the gas in the pre-heating duct and surrounding gas channels, enables to lower a ratio of gas required for cooling the fuel conversion device, and to reduce overall system sizes, weight and cost, while efficiency of the energy system can be increased.

According to an embodiment, the at least one pre-heating duct is configured to establish a gas recirculation flow between an end section of the pre-heating duct and recirculation openings formed in the pre-heating duct. The gas recirculation flow allows to recirculate the fuel gas within the anode channel and/or the reactant gas within the cathode channel. Hence, the gas recirculation flow provides an efficient way to recirculate the desired or required amounts of gas in a recirculation zone formed around the end section and the recirculation openings of the pre-healing duct.

According to an embodiment, the recirculation openings are distributed in an annular fashion around an outer perimeter of the at least one pre-heating duct. The gas recirculation flow can thus be established in a preferably evenly distributed manner around the perimeter of the pre-healing duct. This further helps in recirculating the desired or required amount of gas in the recirculation zone formed around the end section and the recirculation openings of the pre-healing duct.

According to an embodiment, the recirculation openings face an inner perimeter of the anode channel and/or the cathode channel, respectively. Thereby, the respective gas may enter or exit the recirculation openings in a direction extending essentially perpendicular with respect to the inner perimeter of the respective gas channel. This additionally helps in establishing the gas recirculation flow around the pre-healing duct.

According to an embodiment, the at least one pre-heating duct is at least section-wise formed as, comprises and/or is connected to a gas ejector configured to eject the fuel gas into the at least one anode channel and/or the reactant gas into the at least one cathode channel, respectively. Providing the gas ejector helps in driving the respective gas in a manner that the gas recirculation flow is being established in a stable and reliable manner. This additionally helps in in recirculating the desired or required amount of gas and to establish the in the recirculation zone in a vast spectrum of operational load states of the fuel conversion device.

According to an embodiment, the gas ejector is at least section-wise formed as a Laval nozzle. By forming the gas ejector as a Laval nozzle, the fuel gas and/or reactant gas, respectively, can be accelerated and an axial direction of the pre-reading duct by converting thermal energy of the respective gas flow into kinetic energy without the need of providing movable parts or drives. This helps in driving the respective gas in an efficient and reliable way, while keeping the gas ejector compact, simple and robust.

According to an embodiment, the gas ejector has a concave portion configured to establish a gas recirculation outside of the pre-heating duct. The gas-ejector can be configured as an open tube. The recirculation openings can be arranged along a cross-sectional plane extending through the gas ejector and arranged behind a minimal diameter of the concave portion in a flow direction of the respective gas within the gas ejector. This further helps in establishing the gas recirculation flow around the pre-healing duct.

According to an embodiment, the gas ejector has a convex portion configured to establish a gas recirculation within the pre-heating duct. An inverted Laval nozzle can be formed around the convex portion. The gas-ejector can be configured as a closed tube. This helps in establishing the gas recirculation flow within the pre-healing duct.

According to an embodiment, a reformer unit is connected to the at least one pre-heating tube and configured to at least partially reform the fuel gas to provide the reductant. The reformer unit can be provided in the form of a catalytic reformer. For example, the reformer unit can be used to reform a hydrocarbon and/or crack ammonia-based fuel gas into a hydrogen rich gas mixture. Thereby, the fuel conversion device can be adapted to process a variety of fuels as desired or required.

According to an embodiment, the at least one anode channel at least partially extends within the at least one cathode channel and/or the at least one cathode channel at least partially extends within the at least one anode channel. In other words, the cathode channel can be integrated into the anode channel and vice versa. This further helps in maximising an amount of thermal energy exchanged between the reactant gas in the pre-heating duct and the cathode channel, enables to lower a ratio of reactant gas required for cooling the fuel conversion device, and to reduce overall system sizes, weight and cost, while efficiency of the energy system can be increased.

According to an embodiment, the at least one cathode element, the at least one cathode channel, the at least one pre-heating duct, the at least one anode element and/or the at least one anode channel at least section-wise have a tubular, rectangular, trapezoidal or triangular shaped cross-section. Respective channels and ducts can have complementary shapes. This further helps in allowing to nest the channels and ducts into each other. Thereby, compactness of the energy conversion arrangement and thus the energy system can be further increased, which enables to provide particularly lightweight high density energy conversion arrangements and respective energy systems which meet requirements for airborne apparatuses.

### Brief Description of the Drawings

The subject matter will hereinafter be described in conjunction with the following drawing figures, wherein like numerals denote like elements, and wherein:
Fig. 1 is a schematic illustration of an exemplary embodiment of an apparatus in the form of an aircraft having an energy system with an energy conversion arrangement comprising a fuel conversion device embodied as a fuel cell unit.
Fig. 2 is a schematic front view of an exemplary embodiment a fuel cell element of a fuel conversion device embodied as a fuel cell unit in the form of an SOFC of the apparatus configured for reactant gas recirculation.
Fig. 3 is a schematic semi-transparent/cross-sectional side view of the fuel cell unit shown in Fig. 2.
Fig. 4 is a schematic front view of a further exemplary embodiment a fuel cell element of a fuel conversion device embodied as a fuel cell unit in the form of an SOFC of the apparatus configured for reactant gas recirculation.
Fig. 5 is a schematic semi-transparent/cross-sectional side view of the fuel cell unit shown in Fig. 4.
Fig. 6 is a schematic front view of an exemplary embodiment a fuel cell element of a fuel conversion device embodied as a fuel cell unit in the form of an SOFC of the apparatus configured for fuel gas recirculation.
Fig. 7 is a schematic semi-transparent/cross-sectional side view of the fuel cell unit shown in Fig. 6.
Fig. 8 is a schematic front view of a further exemplary embodiment a fuel cell element of a fuel conversion device embodied as a fuel cell unit in the form of an SOFC of the apparatus configured for fuel gas recirculation.
Fig. 9 is a schematic semi-transparent/cross-sectional side view of the fuel cell unit shown in Fig. 8.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject-matter may be obtained through a review of the illustrations together with a review of the detailed description that follows.

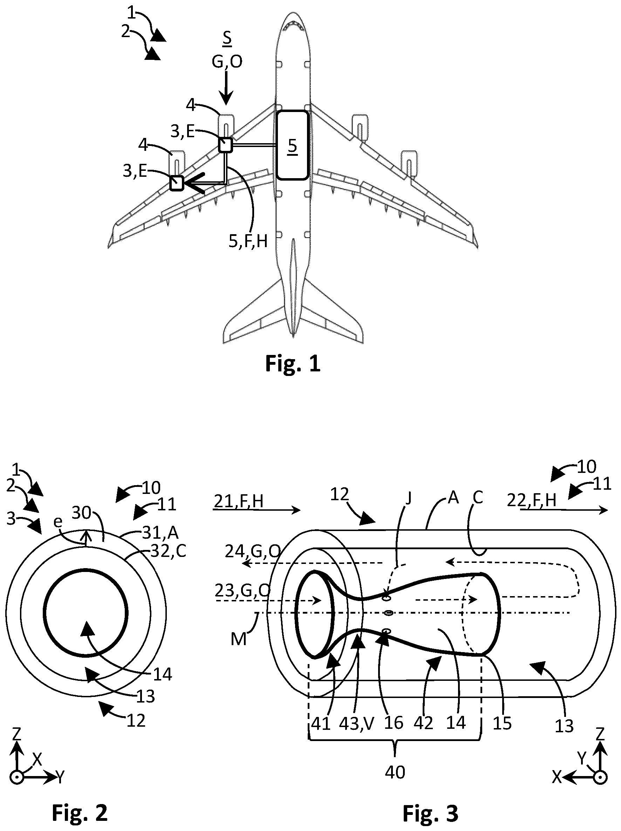

Fig. 1 shows a schematic representation of an apparatus 1 in the form of a vehicle, such as an aircraft, having an energy system 2 comprising fuel conversion arrangements 3, propulsion units 4 and a fuel reservoir 5, such as a fuel tank. The fuel conversion arrangements 3 are configured to provide electrical power E power to the apparatus 1, for example, for driving the proportion units 3. A fuel gas F containing a reactant H, such as hydrogen, hydrocarbon or ammonia type of fuel, may be provided to the fuel conversion arrangements 3 from the fuel reservoir 5 via fuel lines 5. In the fuel conversion arrangements 3, the reductant H can be chemically reduced by an oxidant O, such as oxygen, contained in a reactant gas G, for example, air, taken from ambient surroundings S, e.g., the atmosphere, surrounding the apparatus 1, to provide the electrical power E. The apparatus 1 can extend in a longitudinal direction X, a transverse direction Y and a height direction Z together constituting a Cartesian coordinate system.

Fig. 2 is a is a schematic front view of an exemplary embodiment of a fuel conversion device in the form of a fuel cell unit 10, such as a solid oxide fuel cell (SOFC), of the apparatus 1. The fuel cell unit 10 comprises at least one fuel cell element 11 or subunit having an anode channel 12 for the fuel gas F and a cathode channel 13 for the reactant gas R. A pre-heating duct 14 within an end section 15 (see Fig. 3) may at least partially extend within the cathode channel 13 for pre-heating the reactant gas R.

The fuel cell element 11 further comprises at least one electrolyte element 30, anode element 31 and cathode element 32. The electrolyte element 30 is configured to provide electrons e shed by the reductant H and transported by the oxidant O from the cathode element 32 to the anode element 31 in the course of generating the electrical power E. The anode element 31 is configured to pick up the electrons e from the reductant H. The cathode element 32 is configured to provide the electrons e to the oxidant O.

Fig. 3 is a schematic illustration of an energy conversion arrangement 3 of the apparatus 1, showing a possible distribution of reactant gas G in one of the fuel cell elements 11 of the fuel cell unit 10. An enclosure (not shown) of the fuel cell unit 10 may house in multiple fuel cell elements 11. The enclosure may provide at least one anode inlet 21 and anode outlet 22 on an anode side A, and at least one cathode inlet 23 and cathode outlet 24 on a cathode side C which may be associated to a primary conversion zone i and at least one secondary conversion zone ii of the fuel cell unit 10.

The reactant gas G may enter the pre-heating tube 14 through the cathode inlet 23 for the primary conversion zone i and may exit the pre-heating tube 14 at the end section 15 to then enter the cathode channel 13, for example, after being redirected. The reactant gas G may then flow along the cathode channel 13 where it is being partially depleted of the oxidant O. A portion of the reactant gas G can re-enter the pre-heating tube 14 through recirculation openings 16 formed in the pre-heating tube 14, to then be again travelling towards the end section 15, thereby constituting a gas recirculation flow J. Remaining reactant gas G exits the cathode channel 13 through the cathode outlet 24.

In order to promote formation of the gas recirculation flow J, the pre-heating duct 14 can be at least section-wise formed as, comprise and/or be connected to a gas ejector 40 configured to eject the reactant gas G into the cathode channel 13. The gas ejector 40 can be provided in the form of a Laval nozzle, having a convergent portion 41 and a divergent portion 42 and a middle section 43 therebetween which, is formed as a concave portion V. The recirculation openings 16 can be formed in the area of the concave portion V, for example, extending annularly around an outer perimeter of the pre-heating duct 14 and/or gas ejector 40 in the beginning of the divergent portion 42.

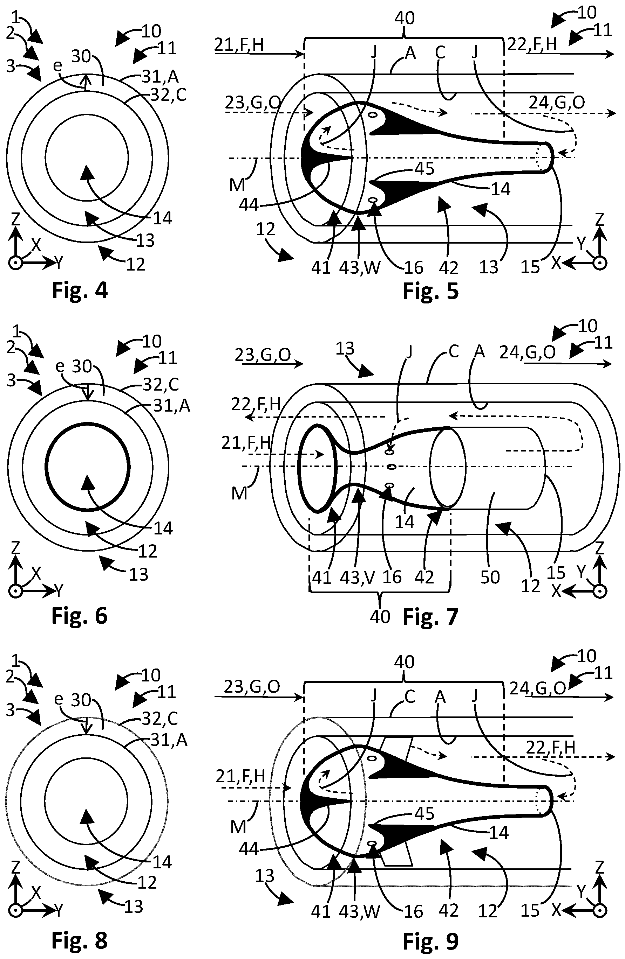

Fig. 4 is a schematic front view of a further exemplary embodiment a fuel cell element 10 of a fuel conversion device 11 embodied as a fuel cell unit in the form of an SOFC of the apparatus 1 configured for reactant gas G recirculation. Fig. 5 is a schematic semi-transparent/cross-sectional side view of the fuel cell unit shown in Fig. 4. In contrast to the embodiment illustrated in Figs. 2 and 3, the embodiment of the fuel cell element 10 illustrated in Figs. 4 and 5 is provided with a pre-heating duct 14 which is configured for establishing an internal gas recirculation flow J.

The pre-heating duct 14 can be at least section-wise formed as, comprise and/or be connected to a gas ejector 40 configured to eject the reactant gas G into the cathode channel 13 from the recirculation openings 16 after sucking in the reactant gas G at the end section 15. Therefore, the gas ejector 40 can have a conversion portion 41, divergent portion 42 and middle section 43 shaped as a convex portion W which may be regarded as an inversely shaped Laval nozzle with respect to the inner perimeter of the surrounding cathode channel 13. The pre-heating duct 14 and/or gas ejector 40 can thus be provided in the form of a closed tube which may be provided with at least one inner splitting element 44 and/or guiding element 45 which can be arranged and shaped such that gas flow within the pre-heating duct 14 and/or gas ejector 40 is being split up and/or redirected, respectively, towards the recirculation openings 16.

Fig. 6 is a schematic front view of an exemplary embodiment a fuel cell element of 11 a fuel conversion device 10 embodied as a fuel cell unit in the form of an SOFC of the apparatus 1 configured for fuel gas F recirculation. Fig. 7 is a schematic semi-transparent/cross-sectional side view of the fuel cell unit shown in Fig. 6. Analogously to the embodiment shown in Figs. 2 and 3, the pre-heating tube 14 is provided.

In contrast to the embodiments shown in Figs. 2 and 3, the pre-heating tube 14 is configured to recirculate the fuel gas F in the anode channel 12. Therefore, the embodiment illustrated in Figs. 5 and 6 can be regarded as an inverse configuration of the fuel cell element 11. Here, the anode side A with the anode element 21 is provided at the inner perimeter of the anode channel 12 while the cathode side C with the cathode element 32 is provided at an outer perimeter of the cathode channel 13 with the electrolyte element 30 arranged therebetween.

Furthermore, the fuel cell element 11 can be provided with a reformer unit 50, for example, a catalytic reformer, which can be configured to at least partially reform the fuel gas G to provide the reductant H. The reformer unit can be used to reform a hydrocarbon and/or crack ammonia-based fuel gas G into a hydrogen rich gas mixture for adapting the fuel conversion device 10 to process a variety of fuels as desired or required. In the present example, the reformer unit 50 is annexed to the pre-heating duct 14, in particular the gas ejector 40, such that the fuel gas F is forced to pass through the reformer unit 50 before entering the anode channel 12 at the end section 15.

Fig. 8 is a schematic front view of a further exemplary embodiment a fuel cell element 11 of a fuel conversion device 10 embodied as a fuel cell unit in the form of an SOFC of the apparatus 1 configured for fuel gas G recirculation. Fig. 9 is a schematic semi-transparent/cross-sectional side view of the fuel cell unit shown in Fig. 8. In the present embodiment of the fuel cell element 11, a gas recirculation flow J of the fuel gas F is provided by means of a pre-heating duct and/or gas ejector 40 in an analogous manner as described above with reference to Figs. 4 and 5, while the anode side A is provided along an inner perimeter of the anode channel 12 as described with reference to Figs. 6 and 7. An annularly shaped reformer unit 50 is arranged in the region of the divergent portion 42 of the inversely shaped gas ejector 40 between the recirculation openings 16 and the end section 15 of the pre-heating duct 14 in a flow direction of the fuel gas F in order to force the incoming fuel gas F as well as the gas recirculation flow J through the reformer unit 50.

In the present example embodiments of the fuel cell element 11, the anode channel 12 can have an electrochemically active outer cathode element 32, where the fuel gas F is fed to an anode channel 12 in the form of a ring gap. The reactant gas G for example, reactant air, is being led to the respective pre-heating duct 14, which can be formed as a tube, before the reactant gas G is redirected to the inner cathode channel 13 at the end of the pre-heating duct 14. Therefore, the anode a channel, cathode channel, pre-heating duct and/or gas ejector 40 can be at least section-wise be coaxially arranged and/or formed with respect to a middle or centre axis M of the fuel cell element 11. With any tubular or annual shape of a channel or duct referred to herein, references to a respective perimeter can be understood as referring to respective inner and/or outer circumferences.

According to the present example embodiments, a tubular cell concept with an ejector which is integrated within the gas channel of the solid oxide cell can be provided, thus additional piping for the recycled gas can be avoided. The gas ejector 40 can be provided as an air ejector integrated in a tubular cell with a closed air channel end on one side. The cold incoming air can be mixed inside the ejector and thus preheated with a split part of the hot redirected air flowing from the end of the tube counterflow wise to the cold incoming air.

Alternatively, or additionally, fuel cells with a both ends of the air channel having an opening can be provided. The cold incoming air can be mixed within the cathode channel 13 with the hot recycled air which is sucked from the downstream cathode air channel 13. The gas ejector 40 is formed by an integrated geometry that is designed inverse to a typical ejector geometry.

Furthermore, the present example embodiments allow for providing an anode gas ejector integrated in a tubular cell with a closed anode gas channel 12 end on one side. The cold incoming fuel can be mixed inside the ejector with a split portion of the anode gas which can then be converted in a downstream catalytic reformer into a hydrogen rich gas mixture. This can provide a compact solution for hydrocarbon-based fuels that are required to be pre-reformed to avoid carbon formation at the anode.

Alternatively, or additionally, fuel cells with a both ends having an open anode gas channel 12 can be provided. The cold incoming fuel can be mixed within the anode channel 12 with the hot recycled anode gas which is sucked from the downstream anode air channel 12. The gas ejector 40 can be formed by an integrated geometry that is designed inverse to a typical ejector geometry.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of Reference Signs

- 1: apparatus / vehicle / aircraft
- 2: energy system
- 3: energy conversion arrangement
- 5: propulsion unit
- 6: fuel line

- 10: fuel cell unit / fuel conversion device
- 11: fuel cell element / unit
- 12: anode channel
- 13: cathode channel
- 14: pre-heating duct
- 15: end section
- 16: recirculation opening

- 21: anode inlet
- 22: anode outlet
- 23: cathode inlet
- 24: cathode outlet

- 30: electrolyte element
- 31: anode element
- 32: cathode element

- 40: gas ejector
- 41: conversion portion
- 42: divergent portion
- 43: middle section
- 44: splitting element
- 45: guiding element

- 50: reformer unit

- e: electron

- A: anode side
- C: cathode side
- E: electrical power
- F: fuel gas
- G: reactant/conversion gas / air
- H: reductant/hydrogen
- J: gas recirculation flow
- M: middle/centre axis
- O: oxidant/Oxygen
- V: concave portion
- W: convex portion
- X: longitudinal direction
- Y: transverse direction
- Z: height direction

## Claims

1. Energy conversion arrangement (2) for an apparatus (1), such as an aircraft, comprising
a fuel conversion device (10), in particular a fuel cell unit, for generating electrical and/or mechanical energy by oxidising a reductant (R) contained in a fuel gas (F) by means of an oxidant (O) contained in a reactant gas (G), with
at least one anode element (31) configured to take up the electrons (e) shed by the reductant (R) and to be picked up by the oxidant (O) during fuel conversion;
at least one anode channel (12) configured to lead the reactant gas (G) along the at least one anode element (31); and/or
at least one cathode element (32) configured to provide electrons (e) shed by the reductant (R) and to be picked up by the oxidant (O) during fuel conversion;
at least one cathode channel (13) configured to lead the reactant gas (G) along the at least one cathode element (32); and
at least one pre-heating duct (14) configured to at least partly recirculate the fuel gas (F) within the anode channel (12) and/or the reactant gas (G) within the cathode channel (13), respectively.

2. Energy conversion arrangement (2) according to claim 1, wherein the at the at least one pre-heating duct (14) is configured to lead the fuel gas (F) to the anode channel (12) and to heat up the fuel gas (F) by heat provided by the fuel gas (G) in the anode channel (12), and/or to lead the reactant gas (G) to the cathode channel (13) and to heat up the reactant gas (G) by heat provided by the reactant gas (G) in the cathode channel (13).

3. Energy conversion arrangement (2) according to claim 1 or 2, wherein the at the at least one pre-heating duct (14) is configured to at least partially provide a counter-flow heat exchange between the fuel gas (F) in the at least one anode channel (12) and the reactant gas (G) in the at least one pre-heating duct (14), and/or between the reactant gas (G) in the at least one cathode channel (13) and the reactant gas (G) in the at least one pre-heating duct (14), respectively.

4. Energy conversion arrangement (2) according to at least one of claims 1 to 3, wherein the at least one anode element (31), the at least one anode channel (12), the at least one cathode element (32), the at least one cathode channel (13) and/or the at least one pre-heating duct (14) are at least partially arranged coaxially with respect to each other.

5. Energy conversion arrangement (2) according to at least one of claims 1 to 4, wherein the at least one pre-heating duct (14) is configured to establish a gas recirculation flow between an end section (15) of the pre-heating duct (14) and recirculation openings (16) formed in the pre-heating duct (14).

6. Energy conversion arrangement (2) according to claim 5, wherein the recirculation openings (16) are distributed in an annular fashion around an outer perimeter of the at least one pre-heating duct (12).

7. Energy conversion arrangement (2) according to claim 5 or 6, wherein the recirculation openings (16) face an inner perimeter of the anode channel (12) and/or the cathode channel (13), respectively.

8. Energy conversion arrangement (2) according to claim 7, wherein the at least one pre-heating duct (14) is at least section-wise formed as, comprises and/or is connected to a gas ejector (40) configured to eject the fuel gas (F) into the at least one anode channel (12) and/or the reactant gas (G) into the at least one cathode channel (13), respectively.

9. Energy conversion arrangement (2) according to claim 8, wherein the gas ejector (40) is at least section-wise formed as a Laval nozzle.

10. Energy conversion arrangement (2) according to claims 8 or 9, wherein the gas ejector (40) has a concave portion (V) configured to establish a gas recirculation outside of the pre-heating duct (14).

11. Energy conversion arrangement (2) according to claims 8 or 9, wherein the gas ejector (40) has a convex portion (W) configured to establish a gas recirculation within the pre-heating duct (14).

12. Energy conversion arrangement (2) according to claim 11, according to at least one of claims 1 to 11, wherein a reformer unit (50) is connected to the at least one pre-heating duct (14) and configured to at least partially reform the fuel gas (F) to provide the reductant (H).

13. Energy conversion arrangement (2) according to at least one of claims 1 to 12, wherein the at least one anode channel (12) at least partially extends within the at least one cathode channel (13) and/or the at least one cathode channel (13) at least partially extends within the at least one anode channel (12).

14. Energy system (2), in particular for powering a propulsion unit (5) for propelling an apparatus (1), such as an aircraft, comprising an energy conversion arrangement (3) according to at least one of claims 1 to 13.

15. Apparatus (1), in particular aircraft, comprising an energy conversion arrangement (3) according to at least one of claims 1 to 13 and/or an energy system (2) according to claim 14.
